# EUROPÄISCHE PATENTANMELDUNG

(11) **EP 1 835 406 A2**
(43) Veröffentlichungstag der Anmeldung: **19.09.2007**
(21) Anmeldenummer: 07002469.0
(22) Anmeldetag: 05.02.2007
(51) Int. Cl.: G06F 11/36

(54) **Verfahren zur Auswahl eines Werkzeugsatzes sowie System und Verwendung hierfür**

(30) Priorität: 10.02.2006 DE 102006006267
(71) Anmelder: Utimaco Safeware AG, 61440 Oberursel (DE)
(72) Erfinder: Wallner, Franz, 4791 Rainbach (AT); Gusenbauer, Christian, 4240 Freistadt (AT); Samminger, Wolfgang, 4020 Linz (AT)
(74) Vertreter: Kunz, Herbert

(57) **Zusammenfassung**

Beschrieben wird ein Verfahren zur Auswahl eines Werkzeugsatzes, vorzugsweise kryptographischen Werkzeugsatzes, aus einer Vielzahl von Werkzeugsätzen in einer computertechnischen Umgebung, wobei durch die Bereitstellung eines Testrahmens, Leistungskenndaten für die Vielzahl von Werkzeugsätzen ermittelt wird, und die Festlegung des Werkzeugsatzes aufgrund ermittelter Parameter der Leistungskenndaten erfolgt.

## Beschreibung

Die vorliegende Erfindung betrifft ein Verfahren zur Auswahl eines Werkzeugsatzes, vorzugsweise kryptographischen Werkzeugsatzes, ein System zur Auswahl eines Werkzeugsatzes und die Verwendung eines Testrahmens hierfür.

Es ist allgemein bekannt, dass viele Werkzeugsätze, insbesondere kryptographische Werkzeugsätze, auf dem Markt verfügbar sind, sie jedoch miteinander zu vergleichen nahezu unmöglich ist. Aus den Produktbeschreibungen der Werkzeugsätze geht hervor, dass diese unterschiedliche kryptographische Algorithmen anbieten und teilweise das Zertifikatsmanagement und die elliptischen Kurvenkryptographie ermöglichen. Auch werden die herkömmlichen Werkzeugsätze für verschiedene Betriebssysteme angeboten. Allerdings ist in den jeweiligen Produktbeschreibungen kein Hinweis darauf zu finden, welche sogenannte Performanzwerte ein Werkzeugsatz liefert. Es ist diesbezüglich interessant zu wissen, wie schnell beispielsweise ein kryptographischer Werkzeugsatz Daten verschlüsseln kann, wie viel Speicher er dafür benötigt, oder auch wie hoch die Hauptspeicherauslastung bei einer Verschlüsselung ist.

Es ist somit Aufgabe der folgenden Erfindung, ein Verfahren und ein System zur Auswahl von Werkzeugsätzen sowie eine Verwendung hierfür bereit zu stellen, die eine Vergleichbarkeit der jeweiligen Werkzeugsätze ermöglicht.

Gelöst wird diese Aufgabe verfahrenstechnisch mit den Merkmalen des Anspruchs 1, vorrichtungstechnisch mit den Merkmalen des Anspruchs 12 und verwendungstechnisch mit den Merkmalen des Anspruchs 20.

Anmeldungsgemäß wird ein Testrahmen bereitgestellt, der Leistungskenndaten für eine Vielzahl von Werkzeugsätzen ermittelt. Die Auswahl des zu verwendenden Werkzeugsatzes wird aufgrund ermittelter Parameter der Leistungskenndaten festgelegt. Auf diese Weise wird in der jeweiligen computertechnischen Umgebung bei Vorhandensein einer Vielzahl von Werkzeugsätzen durch die Implementierung eines Testrahmens eine Maßnahme ergriffen, die je nach Vorauswahl der ermittelten Parameter der Leistungskenndaten für den Anwender den am bestens geeigneten Werkzeugsatz auswählt. Mit der Implementierung des Testrahmens, der die Leistungskenndaten der jeweiligen Werkzeugsätze ermittelt, ist es möglich eine Auswahl zwischen einem Werkzeugsatz (A) und (B) dahingehend zu treffen, obwohl ein Werkzeugsatz (A) beispielsweise beim Verschlüsseln von kleinen Datenmengen am schnellsten ist, wohingegen ein Werkzeugsatz (B) beispielsweise beim Verschlüsseln von großen Datenmengen wiederum wesentlich schneller verschlüsselt. Durch die Vergleichsmöglichkeiten und die damit einhergehende Möglichkeit der Auswahl eines Werkzeugsatzes aus einer Vielzahl von Werksätzen wird die Performanz des Gesamtsystems einer computertechnischen Umgebung erhöht. Anmeldungsgemäß kann beispielsweise bei der Ermittlung der Leistungskenndaten für die Vielzahl von Werkzeugsätzen nicht nur die Verschlüsselungszeit als ein Kriterium herangezogen werden, sondern auch beispielsweise der Speicherbedarf oder die Auslastung des Hauptspeichers.

Weitere vorteilhafte Ausgestaltungen des Anmeldungsgegenstandes sind Gegenstand der Unteransprüche.

Bei der Ermittelung sowohl der Hard- als auch Software kann vorteilhafterweise die anmeldungsgemäße Auswahl der Werkzeugsätze die Leistungsfähigkeit des Gesamtsystems berücksichtigt und somit erhöht werden, und nicht nur spezielle Konfigurationen in einer computertechnischen Umgebung.

Vorteilhafterweise ist die Bestimmung der festgelegten Parameter durch die Funktion beziehungsweise die Funktionalitäten der Vielzahl von Werkzeugsätzen mittels zumindest eines Wrappers vorgesehen. Der Wrapper ist also als eine Komponente anzusehen, der eine bestimmte Funktionalität kapselt, beispielsweise die Funktionen der Werkzeugsätze. Auch hat sich vorteilhafterweise herausgestellt, dass zu jedem Werkzeugsatz ein spezifischer Wrapper vorgesehen sein kann, so dass spezielle Funktionalitäten zu jedem Werkzeugsatz gekapselt werden können und somit die Vergleichbarkeit gegebenenfalls standardisiert werden kann. Wird ferner plattformunabhängige Wrapper hinzugezogen, so können anmeldungsgemäß unterschiedliche Plattformen betrieben werden, wobei hier als Plattform das Betriebssystem inklusive vorhandener Hardware anzusehen ist. Damit kann somit die Anwendungsmöglichkeiten erhöht werden.

Vorteilhafterweise erfolgt die Festlegung eines Werkzeugsatzes aufgrund einer statistischen Auswertung der Parameter. Mit dieser Festlegung des Werkzeugsatzes werden insbesondere die Grundlagen bei der Betrachtung einer Statistik herangezogen, d. h. es werden aufgrund einer wiederholten Berechnungsmethode Maximum, Minimum, Varianz und arithmetisches Mittel herangezogen.

Eine weitere vorteilhafte Möglichkeit der Festlegung des Werkzeugsatzes wird aufgrund einer algorithmischen Auswertung der Parameter durchgeführt, womit eine Prognose für die jeweiligen Werkzeugsätze erstellt werden kann, wobei die statischen Auswertungen noch mit System- und Umgebungsdaten algorithmisch verknüpft und verdichtet werden können.

Erfolgt ferner die Festlegung des Werkzeugsatzes aufgrund einer selbstlernenden Abfrage, so wird während des Betriebes der computertechnischen Umgebung die Methode der Werkzeugauswahl optimiert und somit ständig unterschiedlichen Anforderungsgegebenheiten Rechnung getragen.

Es hat sich ebenfalls als vorteilhaft herausgestellt, wenn die Festlegung des Werkzeugsatzes dynamisch erfolgt, d. h. wenn beispielsweise in einer computertechnischen Umgebung einmal die Festlegung des Werkzeugsatzes und somit die Auswahl des Werkzeugsatzes erfolgt ist, dann kann beispielsweise bei der Erweiterung mit und/oder Abänderungen von Werkzeugsätzen erneut die Festlegung beziehungsweise die Auswahl des Werkzeugsatzes überprüft und somit neu ermittelt und getroffen werden, ohne hierzu das Gesamtsystem von einem Ausgangspunkt neu betrachten zu müssen.

Als vorteilhafte Verschlüsselungsverfahren für die Werkzeugsätze wurden Leistungskenndaten für symmetrische Verschlüsselung, symmetrische Entschlüsselung, Hashing und/oder Zufallszahlenerzeugung ermittelt. Andererseits wurde ebenso vorteilhafterweise Leistungskenndaten für asymmetrische Verschlüsselung und/oder Signaturen ermittelt.

Als vorteilhafter Weiterbildung hat sich herausgestellt, dass der Testrahmen nur über definierte Schnittstellen beziehungsweise werkzeugsatz-unabhängige Schnittstellen mit dem Wrapper kommuniziert, wohingegen diese Wrapper die definierte Schnittstelle beziehungsweise werkzeugsatz-unabhängige Schnittstelle in die werkzeugsatz-spezifische Schnittstellen umsetzt. Auf diese Weise wird auch eine klare Trennung zwischen den Wrappern und die Ermittlung der Leistungskenndaten durch den Testrahmen gewährleistet. Ferner können die Wrapper somit auch unabhängig von den Leistungskenndaten-Analyse verwendet werden.

Dabei hat sich als vorteilhaft herausgestellt, dass ein Mittel zum Speichern von festgelegten Parametern vorgesehen ist, um die jeweiligen ermittelten Leistungskenndaten jederzeit abrufbar zu halten.

Weitere vorteilhafte Ausgestaltungen sind Gegenstand der weiteren Unteransprüche.
- Figur 1: zeigt schematisch die Architektur des anmeldungsgemäßen Systems.
- Figur 2: zeigt ein Ablaufschema bei der Ermittlung von Leistungskenndaten einer bevorzugten Ausgestaltung.

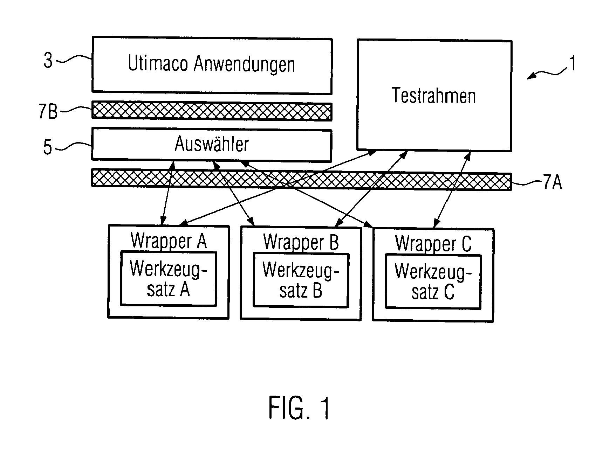

In Figur 1 ist die Architektur des anmeldungsgemäßen Systems einer computertechnischen Umgebung mit einem Testrahmen 1 zur Ermittlung von Leistungskenndaten für die Vielzahl von Werkzeugsätzen (A), (B), (C) und ein Anwendungsprogramm 3 mit einem separat dargestellten Auswähler 5, der aber ebenso in dem Anwendungsprogramm integriert sein kann, vorgesehen. Das Anwendungsprogramm mit Auswähler wählt den Werkzeugsatz aufgrund der Festlegung der Leistungskenndaten bzw. der Parameter der Leistungskenndaten aus und verwendet den ausgewählten Werkzeugsatz. Ebenfalls sind entsprechende Schnittstellen 7a und 7b mit grauen Flächen dargestellt, wobei die Schnittstelle 7b nicht unbedingt erforderlich sein muss sondern lediglich wenn der Auswähler separat zu dem Anwendungsprogramm vorgesehen ist. In der in Figur 1 dargestellten Ausgestaltung ist zu jedem Werkzeugsatz ein sogenannter Wrapper dargestellt, der über die Schnittstelle 7a mit dem Anwendungsprogramm beziehungsweise Auswähler für das Anwendungsprogramm und den Testrahmen 1 kommuniziert. Wie deutlich zu erkennen ist, ist der Testrahmen 1 so vorgesehen, dass er lediglich die Leistungskenndaten ermittelt, jedoch keine Bewertung vornimmt und auch nicht aufgrund der Leistungskenndaten die Werkzeugsätze auswählt.

Zu den werkzeugsatz-spezifischen Leistungskenndaten können beispielsweise folgende Werte zählen wie z. B. Korrektheit, Geschwindigkeit der Verarbeitung, CPU-Auslastung, statischer RAM, dynamischer RAM, Stromverbrauch, Anzahl der Threads, Handles und Prozesse. Im Rahmen der statistischen Auswertung werden diese Werkzeugsatzdaten vorzugsweise n-mal abgefragt, welche vom Anwender der Durchläufe eingestellt werden kann. Daraus ergeben sich die nachfolgenden Statistikwerte wie Minimum, Maximum, Arithmetisches Mittel und Varianz. Das Ergebnis dieser Statistikwerte wird dann als ermittelte Parameter der Leistungskenndaten zur Festlegung des Werkzeugsatzes herangezogen. Der Testrahmen 1 kommuniziert über eine werkzeugsatz-unabhängige Schnittstelle mit dem Wrapper, wobei die Wrapper diese unabhängige Schnittstelle in die werkzeugsatz-spezifische Schnittstelle umsetzen. Mit dieser Maßnahme wird erreicht, dass die Ermittlung der Parameter der Leistungskenndaten in einem speziellen Verwendungskontext aufbereitet werden können und damit auch die Vergleichbarkeit zwischen den jeweiligen Werkzeugsätzen vorhanden ist. Das Vorhandensein der werkzeugsatz-unabhängigen Schnittstelle bewirkt, dass jeder wirklich zum Einsatz kommende, beziehungsweise ausgewählte Werkzeugsatz für das Anwendungsprogramm völlig transparent gehalten wird. Die werkzeugsatz-spezifischen Daten werden durch die Wrapper verdeckt.

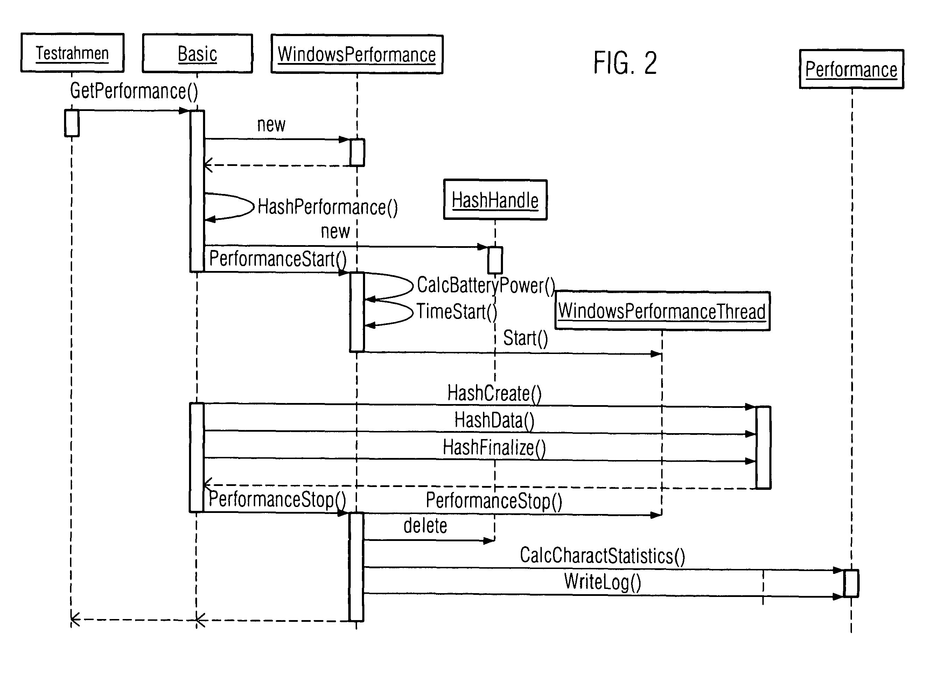

In Figur 2 ist ein Anwendungsbeispiel gezeigt, und zwar für den Ablauf der Ermittlung der Leistungskenndaten für "Hash-Funktionen". Es wird hierbei darauf hingewiesen, dass kein werkzeugsatz-spezifisches Wrapper-Objekt angegeben wurde, um zu verdeutlichen, dass die Leistungskenndaten unabhängig vom Wrapper berechnet werden können. Nach Festlegung im Hauptteil des Anwednungsprogramms, und zwar aus wie vielen Einzelwerten die Statistik der Leistungskenndaten berechnet werden sollen, werden weitere Mittel zum Speichern von Leistungskenndaten bereitgestellt. Gemäß Figur 2 ruft man im Testrahmen die Methode "GetPerformance" auf, der man die Dateinamen, welche durch die Mittel zum Speichern der Leistungskenndaten vorhanden sind, und die Rundenzahl mitgibt. Die hier dargestellte Methode beziehungsweise Abfrage liefert in einem ersten Ausgangsparameter die maschinen-spezifischen Leistungskenndaten und in einem zweiten Ausgangsparameter die werkzeugsatz-spezifische Leistungskenndaten zurück.

Im dem Testrahmen ist unter der Klassifizierung "Wrapper" die eben genannte Methode implementiert. Der Testrahmen erzeugt ein plattform- bzw. betriebssystemabhängiges Objekt "WindowsPerformance" für die Ermittlung der Leistungskenndaten. Dem ""WindowsPerformance" wird die Rundenzahl, der Name der Testdaten-Datei und der Name der Datei zur Speicherung der Einzelwerte mitgegeben. Dann werden die Maschinen-spezifischen Leistungskenndaten ermittelt. Dann wird die Methode "Hash-Performance" aufgerufen, die die Leistungskenndaten für "Hash-Funktionen" berechnet. Zusätzlich gibt es noch die Methoden "EncryptPerformance", "DecryptPerformance" und "RNDPerformance", die die Leistungskenndaten für die Verschlüsselung, Entschlüsselung und für die Zufallszahlenerzeugung ermitteln. Diese sind in der Figur 2 nicht dargestellt. Die Performance-Methoden sind nach folgendem Schema aufgebaut: Es gibt eine Schleife, die alle gemäß dieser Ausführungsform herstellendende Operationen durchläuft. In dieser Schleife wird erst die Korrektheit eines kryptographischen Algorithmus überprüft. Wenn der Korrektheitstest scheitert, werden für diese Operationen keine Leistungskenndaten berechnet. Ist der Korrektheitstest positiv, wird der Werzeugsatz-spezifische Leistungskennwert korrekt gesetzt. Danach wird ein "HashHandle" erzeugt. Dieses "HashHandle" wird für alle Hash-Funktionen in dieser Schleife verwendet. Es wird erst am Ende der Schleife gelöscht. Darauffolgend wird die Methode "Performance-Start" aufgerufen. Sie startet die Ermittlung der Leistungskenndaten. Das "WindowsPerformance"-Objekt fragt beispielsweise erst den aktuellen Akku-Stand der Batterie mit der Methode "CalcBattteryPower" ab, wenn der Rechner gerade auf Akku läuft. Dann wird die Zeitmessung mit Hilfe der Methode "TimeStart" gestartet. Ein eigener Thread, der "WindowsPerformanceThread", ermittelt nebenläufig zum Hashing die restlichen werkzeugsatz-spezifischen Leistungskenndaten, wie die Hauptspeicher-Auslastung und der Speicherbedarf. Dieser wird mit der Methode "Start" erzeugt. Erst dann, weil manche kryptographische Funktionen so schnell sind, dass sie dem "PerformanceThread" teilweise keine Zeit zum Start lassen, wird das Hashing gestartet. Dafür sind drei Methodenaufrufe notwendig, die in geeigneter Form an den Werkzeugsatz weitergereicht werden. Die Methode "HashCreate" initialisiert das "HashHandle", die Methode "HashData" führt das Hashing durch und die Methode "HashData" führt das Hashing durch und die Methode "HashFinalize" beendet das Hashing und liefert den Hash-Wert zurück. Sofort nachdem die Methode "HashFinalize" zurückkehrt, wird der "PerformanceThread" gestoppt. Wenn der "Pertormance-Thread" noch nicht alle Leistungskenndaten ermittelt hat, muss der Hauptthread auf ihn warten. Auch die Zeitmessung wird angehalten. Erst wenn die Schleife Rundenanzahl-mal durchlaufen worden ist, und in der äußeren Schleife für alle Datengrößen Leistungskenndaten ermittelt worden sind, wird das "HashHandle" gelöscht und die Statistikwerte berechnet. Die Methode "CalcCharactStatistics" berechnet das Minimum, das Maximum, den Mittelwert und die Varianz der Leistungskenndaten der aktuellen Operation und speichert sie in den Ausgangsparameter. Die Methode "WriteLogFile" schreibt alle Einzelwerte der aktuellen Operation in die angegebene Datei. Erst wenn für alle Operationen Leistungskenndaten ermittelbar sind, werden die Leistungskenndaten bzw. durch den Testrahmen freigegeben.

Zusammenfassend ist festzuhalten, dass anmeldungsgemäß die Erstellung eines Testrahmens vorgeschlagen wird, der Leistungskenndaten von Werkzeugsätzen, vorzugsweise kryptographische Werkzeugsätze, ermittelt. Aufgrund der Berechnung der Leistungskenndaten soll es möglich sein, den Werkzeugsatz auszuwählen, der eine kryptographische Funktion am besten implementiert. Hierzu wird folgende Vorgangsweise ausgewählt.:
1. Werkzeugsätze analysieren
2. Leistungskenndaten definieren
3. Schnittstelle zwischen der "Basic Infrastructure" und den Werkzeugsätzen definieren
4. Wrapper für den "cryptlib"-Werkzeugsatz implementieren
5. Testrahmen für das Windows-Betriebssystem erstellen
6. Testrahmen und Wrapper auf weitere Betriebssysteme portieren

Im ersten Schritt werden verschiedene kryptographische Werkzeugsätze unterschiedlicher Hersteller analysiert. Gängige Algorithmen, wie AES, Triple-DES und RSA werden von allen analysierten Werkzeugsätzen angeboten. Das Zertifikatsmanagement und die Lauffähigkeit auf unterschiedlichen Betriebssystemen werden nicht von allen Werkzeugsätzen ermöglicht.

Danach werden Leistungskenndaten für die Werkzeugsätze definiert. Die Maschinen-spezifischen Leistungskenndaten, wie die Betriebssystemart und der Prozessortyp, bleiben während eines Algorithmenaufrufs gleich. Die werkzeugsatz-spezifischen Leistungskenndaten, wie die CPU-Auslastung, ändern sich dagegen bei jedem Aufruf.

Im nächsten Schritt wird eine Schnittstelle zwischen der "Basic Infrastructure" und den Wrappern erstellt. Anschließend wird ein Wrapper für einen Werkzeugsatz plattformunabhängig entwickelt, der die wesentlichen Teile dieser Schnittstelle implementiert.

Dann wird ein Testrahmen für das Windows-Betriebssystem entwickelt, der die Leistungskenndaten der kryptographischen Werkzeugsätze ermittelt. Der Testrahmen wird weitestgehend plattformunabhängig implementiert. Lediglich die Ermittlung von Hardware-spezifischen Informationen für die Leistungskenndaten erfolgt abhängig vom Betriebssystem.

Der Testrahmen ermittelt die Leistungskenndaten, bzw. berechnet die Parameter der Leistungskenndaten über die Vielzahl der Werkzeugsätze. Diese Leistungskenndaten bzw. Parameter der Leistungskenndaten werden beispielsweise dem Auswähler zur Verfügung gestellt, um darauf basierend einen bestimmten Algorithmus mit festgelegtem Modus, Schlüssel- und Blocklänge am performantesten anzubieten. Es ist durchaus möglich, dass ein Werkzeugsatz "y" große Datenmengen wesentlich performanter verschlüsselt als ein Werkzeugsatz "x", wohingegen bei kleinen Datenmengen möglicherweise der Werkzeugsatz "x" performanter verschlüsselt als Werkzeugsatz "y". Dabei ist nicht nur die Verschlüsselungszeit ein Kriterium, sondern auch der Speicherbedarf oder die Auslastung des Hauptspeichers. Ein Werkzeugsatz "z" kann beim Verschlüsseln mit Algorithmus "a" und Modus "b" am besten abschneiden, während der Werkzeugsatz "f" beim Verschlüsseln mit demselben Algorithmus "(a)" aber mit einem anderen Modus "c" besser ist.

## Patentansprüche

1. Verfahren zur Auswahl eines Werkzeugsatzes, vorzugsweise kryptographischen Werkzeugsatzes, aus einer Vielzahl von Werkzeugsätzen in einer computertechnischen Umgebung, welches die Schritte aufweist:
a) Bereitstellen eines Testrahmens, der Leistungskenndaten für die Vielzahl von Werkzeugsätzen ermittelt;
b) Festlegen des Werkzeugsatzes aufgrund ermittelter Parameter der Leistungskenndaten.

2. Verfahren nach Anspruch 1, wobei die Hard- und Software in der computertechnischen Umgebung ermittelt wird.

3. Verfahren nach Anspruch 1 oder 2, wobei die ermittelten Parameter durch Funktionen der Vielzahl von Werkzeugsätzen mittels zumindest eines Wrappers, vorzugsweise plattformunabhängigen Wrappers, bestimmt werden.

4. Verfahren nach einem der Ansprüche 1 bis 3, wobei die Festlegung des Werkzeugsatzes aufgrund einer statistischen Auswertung der Parameter erfolgt.

5. Verfahren nach einem der Ansprüche 1 bis 3, wobei die Festlegung des Werkzeugsatzes aufgrund einer algorithmischen Auswertung der Parameter erfolgt.

6. Verfahren nach einem der Ansprüche 1 bis 3, wobei die Festlegung des Werkzeugsatzes aufgrund einer selbstlernenden Abfrage erfolgt.

7. Verfahren nach einem der Ansprüche 1 bis 6, wobei die Festlegung des Werkzeugsatzes dynamisch, vorzugsweise während des Betriebes der computertechnischen Umgebung, erfolgt.

8. Verfahren nach einem der Ansprüche 1 bis 7, wobei weitere während des Betriebes der computertechnischen Umgebung hinzukommende Werkzeugsätze bei der Auswahl des Werkzeugsatzes berücksichtigt werden.

9. Verfahren nach einem der Ansprüche 1 bis 8, wobei Leistungskenndaten für symmetrische Verschlüsselung, symmetrische Entschlüsselung, Hashing und/oder Zufallszahlenerzeugung ermittelt werden.

10. Verfahren nach einem der Ansprüche 1 bis 8, wobei Leistungskenndaten für asymmetrische Verschlüsselung und/oder Signaturen ermittelt werden.

11. Verfahren nach einem der Ansprüche 1 bis 10, wobei der Testrahmen nur über definierte Schnittstellen, vorzugsweise werkzeugsatz-spezifische Schnittstellen, mit den Wrappern kommuniziert.

12. System zur Auswahl eines Werkzeugsatzes, vorzugsweise kryptographischen Werkzeugsatzes, aus einer Vielzahl von Werkzeugsätzen in einer computertechnischen Umgebung, insbesondere zur Durchführung des Verfahrens nach einem der Ansprüche 1 bis 11, **dadurch gekennzeichnet, dass** ein Testrahmen zur Ermittelung von Leistungskenndaten für die Vielzahl von Werkzeugsätzen vorgesehen ist, und ein Anwendungsprogramm, welches den ausgewählten Werkzeugsatz verwendet, vorgesehen ist.

13. System nach Anspruch 12, **dadurch gekennzeichnet, dass** zumindest ein Wrapper, vorzugsweise plattformunabhängigen Wrapper, für die Werkzeugsätze vorgesehen ist.

14. System nach einem der Ansprüche 12 oder 13, **dadurch gekennzeichnet, dass** eine werkzeugsatz-unabhängige Schnittstelle vorgesehen ist.

15. System nach einem der Ansprüche 12 bis 14, **dadurch gekennzeichnet, dass** ein Mittel zum Speichern von ermittelten Parameter, die durch Funktionen der Vielzahl von Werkzeugsätzen bestimmt werden, vorgesehen ist.

16. System nach einem der Ansprüche 12 bis 15, **dadurch gekennzeichnet, dass** der Testrahmen plattformunabhängig in die computertechnische Umgebung implentiert ist.

17. System nach einem der Ansprüche 12 bis 16, **dadurch gekennzeichnet**, das der Wrapper plattformunabhängig implementiert ist.

18. System nach einem der Ansprüche 12 bis 17, **dadurch gekennzeichnet, dass** ein Mittel zur Auswertung der ermittelten Leistungskenndaten vorgesehen ist.

19. System nach einem der Ansprüche 12 bis 17, **dadurch gekennzeichnet, dass** ein Mittel zur dynamischen Auswertung der ermittelten Leistungskenndaten vorgesehen ist.

20. Verwendung eines Testrahmens, insbesondere zur Durchführung des Verfahrens nach einem der Ansprüche 1 bis 11 und/oder zur Verwendung des Systems nach einem der Ansprüche 12 bis 19, der Leistungskenndaten von Werkzeugsätzen, insbesondere kryptographischen Werkzeugsätzen, in einer computertechnischen Umgebung ermittelt.

21. Verwendung nach Anspruch 20, wobei weitere während des Betriebes der computertechnischen Umgebung hinzukommende Werkzeugsätze bei der Auswahl des Werkzeugsatzes berücksichtigt werden
